# EUROPÄISCHE PATENTSCHRIFT

(11) **EP 1 052 049 B1**
(45) Veröffentlichungstag und Bekanntmachung des Hinweises auf die Patenterteilung: **31.08.2005**
(21) Anmeldenummer: 00890138.1
(22) Anmeldetag: 28.04.2000
(51) Int. Cl.: B23D 37/00, B23C 3/06, B23B 5/18

(54) **Verfahren und Einrichtung zur spanabhebenden Bearbeitung**
Method and apparatus for chip removing machining
Méthode et appareil pour l'usinage avec enlèvement de copeaux

(30) Priorität: 03.05.1999 AT 78899
(43) Veröffentlichungstag der Anmeldung: 15.11.2000
(73) Patentinhaber: Boehlerit GmbH & Co.KG., 8605 Kapfenberg (AT)
(72) Erfinder: Kirchberger, Peter, Dipl.-Ing., 3350 Haag (AT)
(74) Vertreter: Wildhack, Helmut

(56) Entgegenhaltungen:
- EP-A- 0 211 216
- US-A- 5 349 888
- PATENT ABSTRACTS OF JAPAN vol. 008, no. 090 (M-292), 25. April 1984 (1984-04-25) & JP 59 007513 A (KOMATSU SEISAKUSHO KK), 14. Januar 1984 (1984-01-14)

## Beschreibung

Die Erfindung betrifft ein Verfahren zur spanabhebenden Bearbeitung, insbesondere zur Erstellung von gekrümmten Oberflächen von Teilbereichen von Werkstücken, zum Beispiel von Lagerzonen an Kurbelwellen, bei welchen das Werkstück sowie das Werkzeug zumindest teilweise gedreht und relativ zueinander bewegt werden.

Weiters befasst sich die Erfindung mit einer Vorrichtung zur spanabhebenden Bearbeitung, insbesondere Einrichtung zur Erstellung von gekrümmten Oberflächen von Werkstücken, zum Beispiele von Lagerzonen an Kurbelwellen, bestehend im Wesentlichen aus mindestens einer antreibbaren Werkstückspanneinrichtung und einer axparallel drehend antreibbaren in Richtung zum Werkstück hin- und herverbschiebbaren und anstellbarn Werkzeugspanneinrichtung mit einem scheibenförmigen Werkzeug, insbesondere zur Durchführung des Verfahrens.

Bei einer Abspanung durch Werkzeuge zur Erstellung von gekrümmten Oberflächen an Werkstücken können Werkstück und Werkzeug relativ zueinander gesteuert bewegt werden, welche Bewegungen letztlich das Bearbeitungsverfahren kennzeichnen. Eine Bearbeitung durch Fräsen liegt nach üblicher Fachmeinung vor, wenn ein bewegtes Werkzeug mit mehreren aufeinanderfolgend in Eingriff gelangenden Schneiden späneerzeugend wirksam ist. Eine Drehbearbeitung erfolgt durch eine drehende und spanerzeugende Bewegung des Werkstückes bei Anstellung von einer oder mehreren Werkzeugschneiden.

Bearbeitete Zapfen von Werkstücken sind sowohl durch ein Drehen als auch durch ein Fräsen des Rohlings herstellbar. Wird ein Lagerzapfen einer Kurbelwelle durch Fräsen bearbeitet, so dreht sich das Werkzeug mit einer Vielzahl von Schneiden, wobei eine langsame Drehung der Welle selbst den Vorschub begründet. Jede Schneide des Werkzeuges ist dabei abspanend wirksam, woraus sich eine große Zerspanungsleistung bzw. eine hohe Effizienz der Bearbeitung ergibt. Nachteilig jedoch ist, dass jede einzelne nacheinander in Eingriff gebrachte Schneide auf Grund des Vorschubes einen Span vom Werkstück abnimmt und dadurch dessen abgespante Oberfläche eine Riefen aufweisende Struktur erhält. Derartige Oberflächenriefen sind bedeutungslos, wenn nachfolgend beispielsweise ein Schleifen der Bearbeitungsbereiche vorgenommen wird oder wenn die Riefen, aufgrund einer geringen mechanischen Belastung dieser Bereiche des Werkstückes im praktischen Einsatz, keine Rißinitiationsgefahr darstellen.

Wenn, wie alternativ zu einer Fräsbearbeitung, ein Abdrehen zur Erstellung der bearbeiteten Oberflächen im Zapfenbereich einer Kurbelwelle vorgenommen wird, können zwar höchste Güte derselben und geringste Maßtoleranzen erreicht werden, die Abspanungsleistung und die Wirtschaftlichkeit der Fertigung sind jedoch gering.

Maschinenbaukomponenten werden im zunehmenden Maße mechanisch höher belastet, sodass zur Vermeidung von Dauerbrüchen bei Wechselbeanspruchungen für hochbelastete Bereiche riefenfreie Oberflächenausführungen erforderlich sind. Dementsprechend werden vielfach die Übergänge der Zapfen von den Hauptlagem und den Pleuellagern einer Kurbelwelle mit riefenfreien Ausrundungen oder dergleichen Hohlkehlen gefordert, was durch eine Drehbearbeitung dieser Bereiche erreichbar ist.

Aus der US-A-5,349,888 ist für eine Drehmaschine ein Verfahren Bearbeitung von Kurbelwellen bekannt geworden, wobei diese jeweils im Bearbeitungsbereich um die Achse gedreht werden und durch ein scheibenförmiges Werkzeug mit umfänglich angeordneten Schneidelementen, die jeweils für eine Vorbearbeitung und eine Fertigbearbeitung des Werkstückes verwendet werden, eine Spanabnahme sequentiell erfolgt.

Um nun bei einer Bearbeitung einer Kurbelwelle einerseits eine große Abspanungsleistung in den Zapfenzonen zu erreichen und andererseits die Oberflächengüte der Ausrundungen oder Hohlkehlen an den Zapfenübergängen zu verbessern, erfolgt vielfach ein Werkzeugwechsel, das heißt, der aufgespannte Rohling wird mit einem Fräswerkzeug bearbeitet, worauf dieses ausgebracht, ein Drehwerkzeug positioniert und mit diesem die Bereiche, die eine riefenfreie Oberfläche aufweisen müssen, mittels Drehens zumindest nachbearbeitet werden. Prinzipiell ist es auch möglich, den Rohling umzuspannen bzw. jeweils in Einzweckmaschinen zu spanen.

Ein Werkzeugwechsel sowie ein Umspannen des Werkstückes sind auch der Maßgenauigkeit wegen aufwendige Operationen, die Zeit erfordern, so dass in der Bearbeitungstechnik, insbesondere für eine spanende Formgebung von Kurbelwellen, wirtschaftliche Lösungen für ein Fräsen und nachfolgend ein Drehen bestimmter Bereiche eines Werkstückes gesucht werden.

Hier will die Erfindung Abhilfe schaffen und setzt sich zum Ziel, ein Verfahren anzugeben, mit welchem eine kostengünstige Erstellung von gekrümmten Oberflächen mit zumindest Teilbereichen mit verbesserter Güte herstellbar ist.

Ferner ist es Ziel der Erfindung, Mängel von Bearbeitungsmaschinen zu beseitigen und eine Vorrichtung zu erstellen, mit welcher ohne Umspannoperationen eine Fräsbearbeitung und ein Drehen eines Werkstückes vorgenommen werden können.

Das Ziel wird durch ein Verfahren gemäß Anspruch 1 und eine Vorrichtung gemäß Anspruch 6 erreicht.

Die mit der Erfindung erreichten Vorteile sind im Wesentlichen darin zu sehen, dass einem hochwirtschaftlichen Bearbeiten durch Fräsen unmittelbar ein Drehen folgt, mittels welchen bei geringer Abspanung eine Oberflächengüte erreichbar ist, die hohe Sicherheit gegen die Initiation von Dauerbrüchen gewährleistet. Dauerbrüche von Bauteilen aufgrund von wechselnden Belastungen derselben gehen fast ausnahmslos von scharfen Kanten und von Oberflächenkerben aus. Aus diesem Grund werden anwendungstechnisch erforderliche Kanten von dynamisch beanspruchten Teilen gerundet oder mit Hohlkehlen ausgeführt, wobei die Oberfläche dieser Bereiche in besonderem Maße kerbfrei zu erstellen ist. Erfindungsgemäß ist es nun möglich, derartige Übergänge in wechselnd beanspruchten Teilen besonders wirtschaftlich sowie mit einer hohen Oberflächengüte, zumindest in den erforderlichen Teilbereichen, zu fertigen.

Fertigungstechnisch, jedoch auch hinsichtlich verbesserter Gebrauchseigenschaften kann es günstig sein, wenn bei einer Herstellung von Kurbelwellen die Lagerzonen jeweils im ersten Bearbeitungsschritt gefräst werden, wonach im zweiten Bearbeitungsschritt jeweils die Drehbewegung des Werkzeuges in einer vorgesehenen Position beendet und in dieser zumindest die Lagerflächen, die beiderseits der Lagerfläche angeordneten Rundungen oder Hohlkehlen der Lagerzapfen drehbearbeitet werden. Gegebenenfalls ist dazu lediglich eine Erhöhung der Werkstückdrehzahl erforderlich, so daß insgesamt vergleichsweise wesentlich geringere Stückfertigungszeiten erreichbar sind, was auch eine Erhöhung der Kapazität der Bearbeitungsmaschine mit sich bringt.

Wenn weiters, wie vorteilhaft vorgesehen sein kann, im zweiten Bearbeitungsschritt die Lagerflächen der Kurbelwelle jeweils durch zumindest eine schräggestellte Werkzeugkante mittels Drehräumens abgespant werden, wobei ein Nachdrehen des Werkzeuges in Abhängigkeit von der Kantenschräge bezogen auf die Lageraxe erfolgt, ist es möglich, zusätzlich eine verbesserte Axparallelität der Fläche zu erhalten und eine geringere Maßtoleranz vorzusehen bzw. die Schleifzugabe an den Lagerstellen zu verkleinern.

Insbesondere im Hinblick auf einen kontinuierlichen Zerspanungsvorgang sowie ein Vermeiden eines Umspannens des Werkstückes bzw. Rohlings, was in nachteiliger Weise die Bearbeitungszeiten erhöhen und die Bearbeitungsgenauigkeit verringern kann, ist es bevorzugt, wenn bei einer Bearbeitung eines exzentrischen Teiles des drehbewegten Werkstückes, zum Beispiel einer Pleuellagerzone, einer um die Hauptlageraxe drehbewegten Kurbelwelle, das Werkzeug, wie bekannt, der Bearbeitungsfläche gesteuert nachgeführt wird, wobei im zweiten Bearbeitungsschritt in Abhängigkeit von der Amplitude der Bearbeitungsfläche und von dem Abstand der Schneidkante von der Werkzeugachse, eine oszillierende Schwenkbewegung, insbesondere ein oszillierendes Drehschwenken, des Werkzeuges in einem Winkelbereich der Nachführung überlagert wird.

Das weitere Ziel der Erfindung, die Mängel von bekannten Bearbeitungsmaschinen zu beseitigen, wird dadurch erreicht, daß die in der Richtung des Werkstückes bewegbare Werkzeugspanneinrichtung mit dem Werkzeug alternativ zur Drehbewegung für ein Fräsen, zum Nachführen einer Drehschneide an dem Bearbeitungsbereich um einem Winkel gesteuert, oszillierend schwenkbar bzw. dergleichen drehbar ausgebildet ist.

Erfindungsgemäß wird dadurch erreicht, daß das Drehwerkzeug auch bei sich exzentrisch um eine Axe drehenden Bearbeitungsflächen, wie zum Beispiel Pleuellagerflächen einer Kurbelwelle, in allen Fällen winkelgerecht, das heißt mit gleichbleibendem Span- Frei- und Anstellwinkel in Eingriff bringbar ist.

In Weiterbildung der erfindungsgemäßen Bearbeitungseinrichtung ist für eine Drehbearbeitung einer Zylinderfläche von besonderem Vorteil, wenn der Oszillation des Werkzeuges um die Einspannachse zum Nachführen der Drehschneide der Bearbeitungsfläche am Werkstück, eine sich aus der Schneidengeometrie ableitende Verschiebung des Oszillationsbereiches für ein Drehräumen überlagerbar ist. Derart wird ein sogenannten Rattern des Werkzeuges, welches leicht bei der Abnahme von breiten Spänen entsteht, vermieden und eine hohe Güte der gedrehten Oberfläche am Werkstück erreicht.

Im folgenden soll die Erfindung anhand von lediglich einen Ausführungsweg darstellenden Zeichnungen näher erläutert werden. Es zeigt schematisch
- Fig. 1: Fräsbearbeitung eines Kurbelwellenzapfens
- Fig. 2: Drehbearbeitung
- Fig. 3: Drehräumbearbeitung
- Fig. 4 a: Rohling

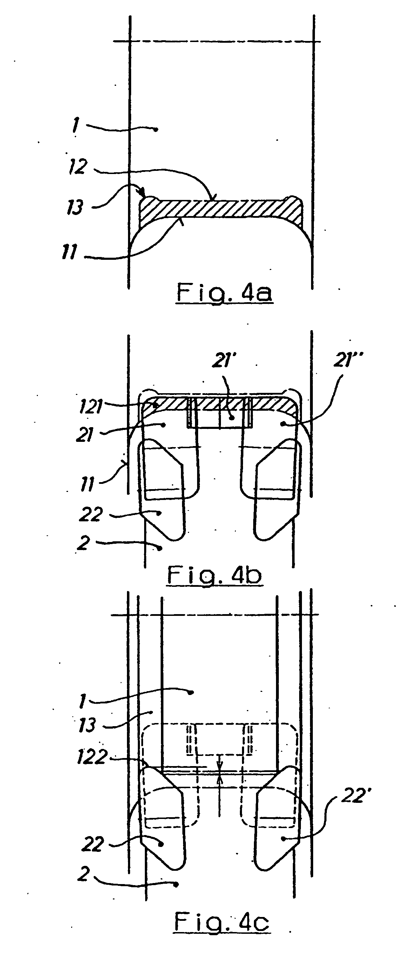

- Fig. 4 b: Fräsform
- Fig. 4 c: Dreh- oder Endform

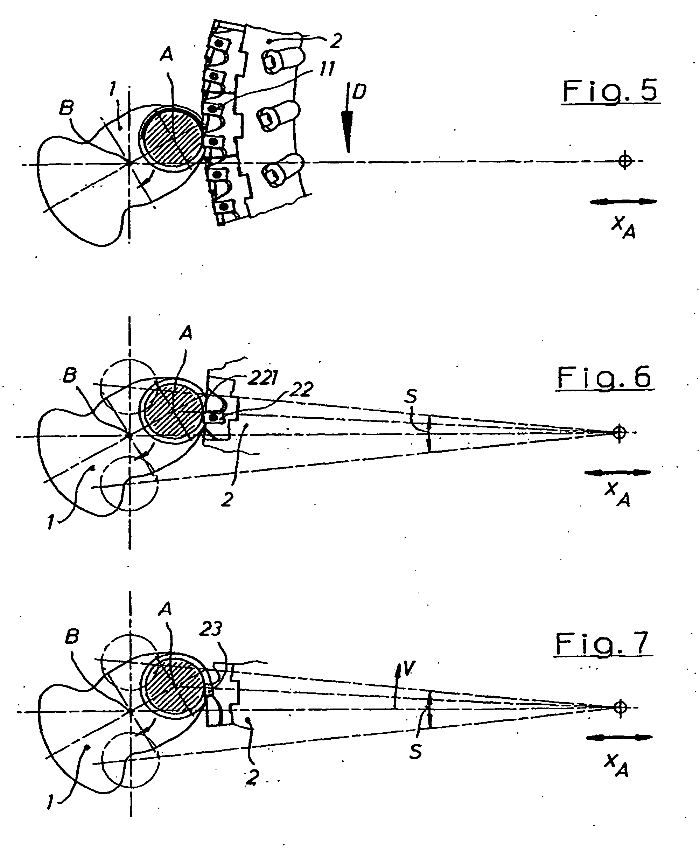

- Fig. 5: Werkzeugbewegung beim Fräsen
- Fig. 6: Werkzeugbewegung beim Drehen
- Fig. 7: Werkzeugbewegung beim Drehräumen

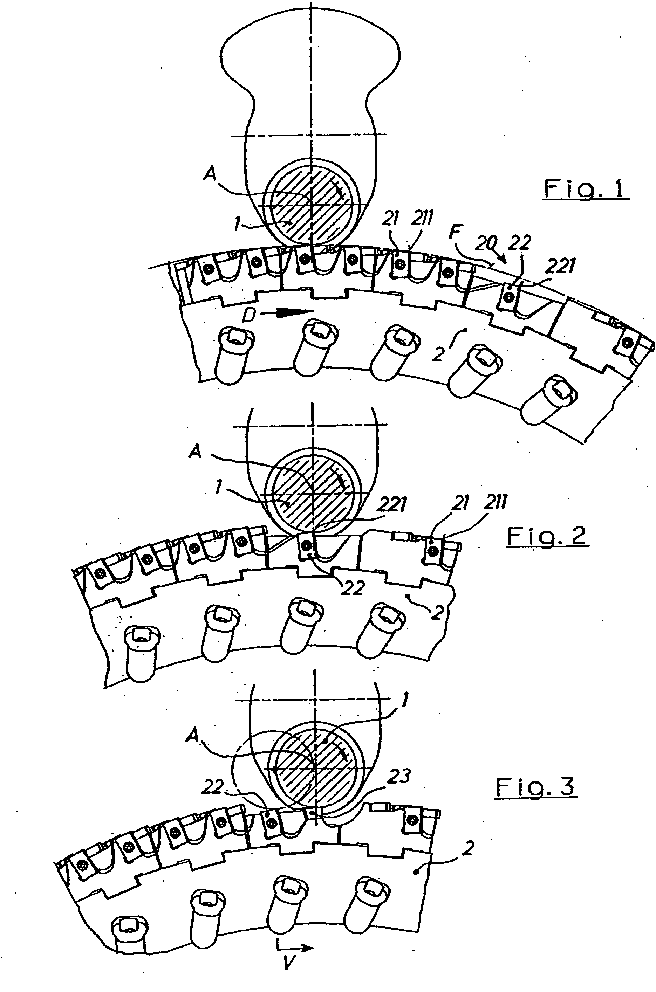

In Fig. 1 ist ein Werkstück 1, im vorliegenden ein Kurbelwellenzapfen, bei einer Fräsbearbeitung durch ein Werkzeug 2 dargestellt, wobei eine Drehrichtung D des Werkzeugs derjenigen eines Werkstückes 1 gegengerichtet ist. Schneidkörper 21 mit Schneidecken 211 für ein Fräsen, die einen Flugkreis F bildend, durch eine Rotation des Werkzeuges in einer Folge bei einer Anstellung desselben abspanend wirksam sind, werden in einem Umfangsbereich durch ein Segment 20 mit einem, in der Position gegen die Werkzeugachse bzw. den Flugkreis F rückversetzten Schneidkörper 22 mit einer Schneidkante 221 für eine Drehbearbeitung unterbrochen. Während einer Fräsbearbeitung des Werkstückes gelangt die Schneidkante 221 nicht in Eingriffsposition.

Nach einer Spanabnahme durch ein Fräsen wird das Werkzeug 2 in einer Position, wie in Fig. 2 dargestellt, angehalten bzw. festgelegt, in welcher ein Schneidkörper 22 mit einer Schneidkante 221 für eine Drehbearbeitung des Werkstück 1 gegenüber liegt. Durch Anstellen des nun feststehenden Werkzeuges 2 an ein sich drehendes Werkstück 1 erfolgt eine Drehbearbeitung von Oberflächenteilen.

In Fig. 3 ist eine Bearbeitung einer Zylinderfläche eines Werkstückes 1, zum Beispiel eines Zapfens einer Kurbelwelle, durch Drehräumen dargestellt. Gegenüber einem sich drehenden Werkstück wird dabei eine schräggestellte Werkzeugschneide 221 durch einen Vorschub V gegen die Werkstückdrehrichtung jeweils partiell spanbildend wirksam.

Die Fig.4 zeigen jeweils schematisch einen Ablauf einer Abspanung.

In Fig. 4a ist ein Werkstück 1 mit einer Kontur 11 des Rohlings und einer solchen 12 des bearbeiteten Teiles dargestellt, wobei die Bearbeitungskontur 12 Hohlkehlen 13 besitzt.

Fig. 4b zeigt obiges Werkstück mit einem durch ein Fräsen mittels Fräs-Schneidkörpers 21, 21', 21" abgespanten Volumsbereich 121 hinsichtlich einer Rohlingsoberfläche 11. Schneidkörper 22 für eine Drehbearbeitung sind in einem Teilbereich des Werkzeugumfanges rückversetzt und nicht im Eingriff.

In Fig. 4c ist ein Werkzeug 2 derart positioniert, daß Drehkörper 22 und 22' mit Schneiden 122 Hohlkehlen 13 in einen Bearbeitungsbereich eines Werkstückes eindrehen.

In Fig. 5 ist eine Fräsbearbeitung eines Werkstückes 1 bzw. ein hinsichtlich der Standzeit der Werkzeugschneiden vorteilhaftes Abfräsen eines Pleuelzapfens einer Kurbelwelle in Gleichlaufrichtung dargestellt. Weil die Kurbelwelle derart aufgespannt ist, daß sich diese um die Hauptlageraxe B dreht, vollführt der Pleuelzapfen bzw. dessen Axe A eine exzentrische Drehbewegung der durch eine Nachführbewegung X_{A} des Werkzeuges Rechnung getragen werden muß. Erfolgt nun dem Fräsen nachgeordnet erfindungsgemäß eine Drehbearbeitung mittels eines Schneidkörpers 22, wie in Fig. 6 dargestellt, so wird zusätzlich zu einer Nachführbewegung X_{A} eine drehende Schwenkbewegung S des Werkzeuges 2 zur winkelgerechten Anstellung der Schneidkante 221 vorgenommen.

Eine Schwenkbewegung S eines Werkzeuges 2 beim Drehen eines exzentrisch aufgespannten Werkstückes 1 wird, wie in Fig. 7 dargestellt ist, bei einem Drehräumen eine Verschiebung V überlagert, die einen feinen Drehspan in Axrichtung ohne Rattererscheinungen des Werkzeuges von der Werkstückoberfläche abnimmt.

## Patentansprüche

1. Verfahren zur spanabhebenden Bearbeitung, insbesondere zur Erstellung von gekrümmten abgespanten Oberflächen von Teilbereichen von Werkstücken, zum Beispiel von Lagerzonen an Kurbelwellen, bei welchen das Werkstück sowie zumindest teilweise das Werkzeug gedreht und relativ zueinander bewegt werden und zumindest Teile der endbearbeiteten Oberflächenbereiche eine verbesserte Güte und/oder eine geringere Maßtoleranz aufweisen, **dadurch gekennzeichnet, dass** die Bearbeitung in zwei Schritten mit einem einzigen Werkzeug erfolgt, wobei als erster Bearbeitungsschritt ein Abspanen durch Fräsen durchgeführt wird, bei welchem das Werkstück sowie das Werkzeug gedreht und relativ zueinander angestellt werden, wonach in einem zweiten Bearbeitungsschritt ein weiteres Abspanen von Teilbereichen mit der Maßgabe erfolgt, dass die Drehbewegung des Werkzeuges beendet und zumindest eine Schneidkante desselben an das sich drehende Werkstück angestellt wird und von diesem Drehspäne abgenommen werden, wobei zusätzlich zu einer Nachführbewegung eine drehende Schwenkbewegung des Werkzeuges zur winkelgerechten Anstellung der Schneidkante erfolgt.

2. Verfahren nach Anspruch 1, **dadurch gekennzeichnet, dass** bei einer Herstellung von Kurbelwellen die Lagerzonen jeweils im ersten Bearbeitungsschritt gefräst werden, wonach im zweiten Bearbeitungsschritt jeweils die Drehbewegung des Werkzeuges in einer vorgesehenen Position beendet und in dieser die Lagerflächen sowie die beiderseits der Lagerfläche angeordneten Rundungen oder Hohlkehlen der Lagerzapfen drehbearbeitet werden.

3. Verfahren nach einem der Ansprüche 1 oder 2, **dadurch gekennzeichnet, dass** im zweiten Bearbeitungsschritt die Lagerflächen der Kurbelwelle jeweils durch zumindest eine schräggestellte Werkzeugkante mittels Drehräumens abgespant wird, wobei ein Nachdrehen des Werkzeuges in Abhängigkeit von der Kantenschräge bezogen auf die Lageraxe erfolgt.

4. Verfahren nach einem der Ansprüche 1 bis 3, **dadurch gekennzeichnet, dass** im zweiten Bearbeitungschritt die Hohlkehlen der Kurbelwelle durch Formplatten mittels Drehräumens abgespant werden.

5. Verfahren nach einem der Ansprüche 1 bis 4, **dadurch gekennzeichnet, dass** bei einer Bearbeitung eines exzentrischen Teiles des drehbewegten Werkstückes, zum Beispiel einer Pleuellagerzone, einer um die Hauptlageraxe drehbewegten Kurbelwelle das Werkzeug der Bearbeitungsfläche gesteuert nachgeführt wird, wobei im zweiten Bearbeitungsschritt in Abhängigkeit von der Amplitude der Bearbeitungsfläche und von dem Abstand der Schneidkante von der Werkzeugachse, eine oszillierende Schwenkbewegung, insbesondere ein oszillierndes Drehschwenken, des Werkzeuges in einem Winkelbereich der Nachführung überlagert wird.

6. Vorrichtung zur spanabhebenden Bearbeitung, insbesondere Einrichtung zur Erstellung von gekrümmten Oberflächen von Werkstücken (1), zum Beispiel von Lagerzonen an Kurbelwellen, bestehend im Wesentlichen aus mindestens einer antreibbaren Werkstückspanneinrichtung und einer axparallel drehend antreibbaren, in Richtung (A) zum Werkstück (1) hin - und herverschiebbaren und anstellbaren Werkzeugspanneinrichtung mit einem scheibenförmigen Werkzeug (2), insbesondere zur Durchführung des Verfahrens gemäß den vorgeordneten Ansprüchen, **dadurch gekennzeichnet, dass** die in Richtung X_{A} bewegbare Werkzeugspanneinrichtung mit dem Werkzeug (2) alternativ zur Drehbewegung (D) für ein Fräsen, zum Nachführen einer Drehschneide (221) an den Bearbeitungsbereich um einen Winkel (S) gesteuert, oszillierend schwenkbar bzw. dergleichen drehbar ausgebildet ist.

7. Vorrichtung nach Anspruch 6, **dadurch gekennzeichnet, dass** der Oszillation (S) des Werkzeuges (2) um die Einspannachse zum Nachführen der Schneidkante (221) eine sich aus der Schneidengeometrie ableitende Verschiebung (V) des Oszillationsbereiches für ein Drehräumen überlagerbar ist.

## Claims

1. A process for material-removing machining, particularly for producing curved machined surfaces of part regions of workpieces, for example bearing zones on crankshafts, in which the workpiece and, at least sometimes, the tool are rotated and moved relative to one another, and at least parts of the finish-machined surface regions have an improved quality and/or a lower dimensional tolerance, **characterised in that** the machining takes place in two steps using a single tool, material removal by milling being carried out as the first operating step, in which the workpiece and the tool are rotated and set relative to one another, after which further material removal in part regions is effected in a second operating step on condition that the rotary movement of the tool finishes and at least one cutting edge of the tool is set against the rotating workpiece and turning chips are removed from this workpiece, a rotating pivotal movement of the tool being effected in addition to a tracking movement in order to set the cutting edge at the correct angle.

2. A process according to Claim 1, **characterised in that,** when manufacturing crankshafts, the bearing zones are milled in each case in the first operating step, after which the rotary movement of the tool finishes in a specified position in the second operating step and, in this position, the bearing surfaces and the curves or grooves of the bearing journals, which are arranged on both sides of the bearing surface, are produced in a turning operation.

3. A process according to one of Claims 1 or 2, **characterised in that,** in the second operating step, the bearing surfaces of the crankshaft are each machined by at least one angled tool edge in a turn-broaching procedure, a subsequent rotation of the tool being effected according to the inclination of the edge in relation to the bearing axis.

4. A process according to one of Claims 1 to 3, **characterised in that,** in the second operating step, the grooves of the crankshaft are machined by moulding plates in a turn-broaching procedure.

5. A process according to one of Claims 1 to 4, **characterised in that,** when machining an eccentric part of the rotated workpiece, for example a connecting rod bearing zone of a crankshaft rotated about the main bearing axis, the tool is guided such that it tracks the machining surface in controlled manner, an oscillating pivotal movement, particularly an oscillating rotary pivotal movement, of the tool in an angular range being superimposed over the tracking movement in the second operating step according to the amplitude of the machining surface and the spacing between the cutting edge and the tool axis.

6. A device for material-removing machining, particularly a device for producing curved surfaces of workpieces (1), for example bearing zones on crankshafts, comprising substantially at least one drivable workpiece-clamping device and an adjustable tool-clamping device which is drivable in axially parallel rotating manner and is displaceable back-and-forth in a direction (A) with respect to the workpiece (1) and has a disc-shaped tool (2), particularly for carrying out the process according to the preceding claims, **characterised in that** the tool-clamping device, which is movable in the direction X_{A} and has the tool (2), is constructed such that, alternatively to the rotary movement (D) for milling, it is capable of executing a controlled oscillating pivotal movement or similar rotary movement through an angle (S) for the tracking guidance of a rotary cutting edge (221) along the machining area.

7. A device according to Claim 6, **characterised in that** a displacement (V) of the oscillation region for a turn-broaching procedure, which is deduced from the geometry of the cutting edge, may be superimposed over the oscillation (S) of the tool (2) about the clamping axis for the tracking guidance of the cutting edge (221).

## Revendications

1. Méthode d'usinage avec enlèvement de copeaux, en particulier pour réaliser des surfaces incurvées usinées sur des parties de pièces, par exemple des portées de vilebrequin, dans laquelle la pièce et, au moins en partie, l'outil sont entraînés en rotation et déplacés l'un par rapport à l'autre et au moins certaines parties des zones de surface ayant subi un usinage de finition présentent une meilleure qualité et/ou une tolérance dimensionnelle plus étroite, **caractérisée en ce que** l'usinage se déroule en deux étapes au moyen d'un seul outil, la première étape d'usinage consistant en un enlèvement de copeaux par fraisage lors duquel la pièce et l'outil sont entraînés en rotation et mis en prise l'un avec l'autre, après quoi s'effectue, lors d'une seconde étape d'usinage, un autre enlèvement de copeaux sur des zones partielles, étant précisé que le mouvement de rotation de l'outil est alors arrêté, au moins une arête de coupe de l'outil est mise en prise avec la pièce en rotation et des copeaux de tournage sont enlevés de cette dernière, un mouvement de rotation et de pivotement de l'outil étant superposé à un mouvement de poursuite pour assurer une mise en prise angulairement correcte de l'arête de coupe.

2. Méthode selon la revendication 1, **caractérisée en ce que** lors de la fabrication de vilebrequins, les portées sont chacune fraisées lors de la première étape d'usinage, après quoi, lors de la seconde étape d'usinage, le mouvement rotatif de l'outil est arrêté dans une position prédéfinie dans laquelle les portées ainsi que les arrondis ou congés de maneton agencés de part et d'autre de la portée sont usinés par tournage.

3. Méthode selon la revendication 1 ou la revendication 2, **caractérisée en ce que**, lors de la seconde étape d'usinage, chacune des portées du vilebrequin est usinée par tournage-arasage au moyen d'au moins une arête d'outil oblique, un ajustement en rotation de l'outil étant effectué en fonction de l'inclinaison de l'arête par rapport à l'axe du palier.

4. Méthode selon l'une des revendications 1 à 3, **caractérisée en ce que**, lors de la seconde étape d'usinage, les congés du vilebrequin sont ménagés par tournage-arasage au moyen de plaquettes de profilage.

5. Méthode selon l'une des revendications 1 à 4, **caractérisée en ce que** lors de l'usinage d'une partie excentrée de la pièce entraînée en rotation, par exemple une portée de bielle d'un vilebrequin entraîné en rotation autour de l'axe du palier principal, l'outil suit de manière commandée la surface d'usinage, étant précisé que dans la seconde étape d'usinage, en fonction de la dimension de la surface à usiner et de la distance entre l'arête de coupe et l'axe de l'outil, un mouvement de pivotement oscillatoire, notamment un mouvement de rotation et de pivotement, de l'outil sur un secteur angulaire est superposé au mouvement de poursuite.

6. Dispositif d'usinage par enlèvement de copeaux, en particulier dispositif pour réaliser des surfaces incurvées de pièces (1), par exemple de portées de vilebrequin, composé pour l'essentiel d'au moins un dispositif de serrage de pièce commandable et d'un dispositif de serrage d'outil apte à être entraîné en rotation parallèlement à l'axe, à être rapproché ou éloigné de la pièce (1) dans la direction (A) et à être mis en prise avec ladite pièce, doté d'un outil en forme de disque (2), notamment pour mettre en oeuvre la méthode selon les revendications précédentes, **caractérisé en ce que** le dispositif de serrage d'outil, qui est mobile dans la direction X_{A}, est conçu apte à décrire avec l'outil (2) un mouvement commandé de pivotement oscillatoire ou un mouvement rotatif similaire sur un angle (S) en alternative au mouvement rotatif (D) associé à une opération de fraisage, pour qu'une arête de coupe (221) suive la zone à usiner.

7. Dispositif selon la revendication 6, **caractérisé en ce qu'**à l'oscillation (S) de l'outil (2) autour de l'axe de serrage, on peut superposer, pour le mouvement de poursuite de l'arête de coupe (221), une translation (V) - qui est déduite de la géométrie de l'arête de coupe - de la zone d'oscillation en vue d'un tournage-arasage.
